# EUROPÄISCHE PATENTSCHRIFT

(11) **EP 1 851 038 B1**
(45) Veröffentlichungstag und Bekanntmachung des Hinweises auf die Patenterteilung: **09.07.2014**
(21) Anmeldenummer: 06707073.0
(22) Anmeldetag: 18.02.2006
(51) Int. Cl.: B29C 70/48, B29C 70/08, B29C 70/22, B29C 70/54

(54) **VERFAHREN ZUR HERSTELLUNG VON SCHICHTSTOFFEN NACH DEM HARZINJEKTIONSVERFAHREN UND VERARBEITUNGSHILFSMITTEL DAFÜR**
METHOD FOR PRODUCTION OF LAMINATES BY THE RESIN INJECTION METHOD AND PROCESS ADJUNCT FOR THE SAME
PROCEDE POUR PRODUIRE DES STRATIFIES PAR MOULAGE PAR INJECTION DE RESINE ET MOYENS AUXILIAIRES DE TRAITEMENT POUR CE PROCEDE

(30) Priorität: 23.02.2005 DE 202005003045 U
(43) Veröffentlichungstag der Anmeldung: 07.11.2007
(73) Patentinhaber: Eisele, Michael, 46397 Bocholt (DE)
(72) Erfinder: Eisele, Michael, 46397 Bocholt (DE)
(74) Vertreter: Mentzel, Norbert
(86) Internationale Anmeldenummer: PCT/EP2006/001488
(87) Internationale Veröffentlichungsnummer: WO 2006/089696

(56) Entgegenhaltungen:
- WO-A-02/28623
- WO-A-03/031178
- DE-U1- 20 120 447
- US-A- 5 766 534
- US-A1- 2003 132 543

## Beschreibung

Die vorliegende Erfindung betrifft ein Verfahren zur Herstellung von Schichtstoffen nach dem Harzinjektionsverfahren (RTM-Verfahren) und ein Verarbeitungshilfsmittel dafür, insbesondere zur besseren Fixierung von gleichen oder unterschiedlichen unbeschichteten Faserstofflagen in einer Form einer Harzinjektionsvorrichtung (RTM-Form). Das Verarbeitungshilfsmittel ermöglicht den Durchfluss des Harzgemisches bei der Herstellung von Schichtstoffen im RTM-Verfahren.

Seit vielen Jahren sind faserverstärkte Kunstharzprodukte bekannt, die in den verschiedensten Industriebereichen verwendet werden. Üblicherweise wird ein solcher Faserverbundwerkstoff gebildet, indem ein Faserstoff mit einer Harzzusammensetzung imprägniert wird, die ein Gemisch aus beispielsweise einem Epoxidharz, einem Reaktanten (Vernetzungsmittel) und einem Beschleuniger umfasst. Die Harzmatrix wird in flüssiger Form entweder bei einem Handlaminierungsverfahren bzw. in einem kontinuierlichen Laminierungsverfahren zum Herstellen von Prepregs oder in einem Harzinjektionsverfahren (RTM- Resin Transfer Moulding) aufgetragen. Die endgültige Raumform des Schichtstoffes wird durch Aufeinanderlegen mehrerer Lagen solch imprägnierter Faserstoffe und durch anschließendes Pressen und Vernetzen durch Wärmeeinwirkung erhalten. Bei dem RTM-Verfahren werden gleiche oder unterschiedliche Faserstofflagen in eine Form eingelegt. Die Form kann dabei durch Auslegen mit einer Folie geschützt werden. Anschließend wird die Form geschlossen und ein hitzevernetzbares Matrixharz zusammen mit einem Reaktanten und gegebenenfalls einem Beschleuniger als Gemisch in die Form injiziert. Durch Wärmeeinwirkung härtet das Harz aus und der fertige Schichtstoff entsteht. Es ist jedoch schwierig, die Faserschichtlagen in die Form einzulegen ohne dass die einzelnen Schichten gegeneinander verrutschen, insbesondere bei schweren Fasermatten ist die genaue Positionierung in der Form problematisch.

Bei einem verbesserten RTM-Verfahren gemäß US 5,766,534 werden die jeweiligen Schichten des Fasermaterials, die für den fertigen Schichtstoff benötigt werden, vor dem Einlegen in die RTM-Form mit einem klebrig machenden Pulver besprüht bzw. das Bindepulver aufgestreut, welches beim Erhitzen auf der Oberfläche des Fasergebildes schmilzt und sich beim Abkühlen verfestigt. Derartig vorverfestigte Faserschichten-Vorformlinge lassen sich besser in die RTM-Form einlegen und drapieren. Gemäß dem Gebrauchsmuster DE 201 20 447 kann eine solche Vorverfestigung des textilen Flächengebildes mit einem klebrig machenden Bindepulver erfolgen. Diese Vorverfestigung der einzelnen Lagen der Schichtstoffe erfordert jedoch einen zusätzlichen Arbeitsschritt, der ein solches Verfahren, insbesondere bei großflächigen und schweren Bauteilen teuer macht.

Aufgabe der Erfindung ist es, ein verbessertes, günstigeres, weiterentwickeltes RTM-Verfahren zur Verfügung zu stellen, das ebenfalls eine gute Fixierung der Lagen in der Form der Harzinjektionsvorrichtung ermöglicht.

Diese Aufgabe wird mit einem Verfahren zur Herstellung von Schichtstoffen gemäß den Merkmalen des Anspruchs 1 erfüllt, wobei ein erfindungsgemäßes Verarbeitungshilfsmittel eingesetzt wird.

Das Verfahren zur Herstellung von Schichtstoffen umfasst die folgenden Schritte:
- Einlegen einer ersten unbeschichteten Faserstofflage in die Form einer Harzinjektionsvorrichtung,
- Auflegen einer aus einem textilen Flächengebilde bestehenden Zwischenlage als Verarbeitungshilfsmittel auf die erste Faserstofflage, wobei diese Zwischenlage mit einer klebrigen Beschichtung versehen ist, die aus mit dem Matrixharz vernetzbaren Polymer bzw. Polymergemisch ohne Reaktant aufgebaut ist und wobei die Zwischenlage in ihrer Gesamtfläche geringer dimensioniert ist als die unbeschichtete Faserstofflage,
- Einlegen weiterer unbeschichteter Faserstofflagen sowie Auflegen weiterer beschichteter Zwischenlagen auf die Faserstofflagen,
- Schließen der Form,
- Evakuieren der geschlossenen Form und Injektion des Harzgemisches, das aufgebaut ist aus einem vernetzbaren Matrixharz, Reaktant und gegebenenfalls Beschleuniger, bis zur vollständigen Imprägnierung aller Faserstofflagen,
- Vernetzung des Matrixharzes durch Wärmeanwendung,
- Herausnahme des Schichtstoffes aus der Form nach Abkühlung.

Dieses Verfahren eignet sich insbesondere zur Herstellung von Schichtstoffen, bei dem insgesamt große und/ oder schwere Faserstoffmatten in der Form positioniert werden müssen. Diese unhandlichen Faserstofflagen müssen bei dem erfindungsgemäßen Verfahren nicht zusätzlich gehandhabt werden, da auf eine Vorbehandlung verzichtet werden kann. Die Faserstofflagen werden unbehandelt, d.h. unbeschichtet in die Form der Harzinjektionsvorrichtung eingelegt. Durch die Verwendung von klebrig gemachten Zwischenlagen werden die unbeschichteten Faserstofflagen beim Harzdurchfluss sicher in Position gehalten.

Die Zwischenlagen stellen Verarbeitungshilfsmittel dar und werden nach Bedarf zwischen einzelnen oder allen unbeschichteten Faserstofflagen vorgesehen.

Je nach Größe und Form der unbeschichteten Faserstofflagen wird auch die Größe der beschichteten Zwischenlagen gewählt. Die Zwischenlage ist in ihrer Gesamtfläche geringer dimensioniert, als die unbeschichteten Faserstofflagen. So können die Zwischenlagen die darunter liegenden unbeschichteten Faserstofflagen teilflächig abdecken, wobei die Zwischenlage dabei aus einem oder mehreren Teilstücken bestehen kann.

Bei einer vollflächigen Abdeckung der Faserstofflagen durch die Zwischenlagen werden insbesondere Zwischenlagen eingesetzt, die nur eine teilflächige Beschichtung besitzen, um zur Benetzung der Faserstofflagen einen ungehinderten Harzfluss zu ermöglichen. Werden dagegen einzelne flächige Teilstücke des Verarbeitungs-hilfsmittels als Zwischenlage eingesetzt, ist es möglich die gesamte Oberfläche dieser Teilstücke zu beschichten. Solche Teilstücke werden an besonders kritischen Stellen auf die Faserstofflagen aufgelegt, nämlich dort, wo am ehesten mit einem Verrutschen der Faserstofflagen beim Harzimprägnieren zu rechnen ist.

In der Regel sind die Zwischenlagen als sehr dünne Schichten aufgebaut, die im fertigen Schichtstoff nicht erkennbar sind. Andererseits können solche Teilstücke auch als zusätzliche Armierung dienen, indem das textile Flächengebilde der Zwischenlage ein Multiaxialgelege ist, das derart in die Form eingelegt wird, dass die meisten Fasern des Multiaxialgeleges so positioniert sind, dass sie beim fertigen Schichtstoff in Kraftaufnahmerichtung liegen.

Der nach diesem Verfahren herzustellende Schichtstoff kann aus gleichen oder unterschiedlichen Faserstofflagen aufgebaut sein.

Das als Zwischenlage verwendete Verarbeitungshilfsmittel besteht aus einem textilen Flächengebilde, welches ein- oder beidseitig, vollflächig oder teilflächig mit einer klebrigen Beschichtung versehen ist. Die Beschichtung des textilen Flächengebildes erfolgt vorzugsweise beidseitig mit einer klebrigen Beschichtung. Diese Beschichtung besteht aus einem Polymer- bzw. Polymergemisch, das keinen Reaktanten und keinen Beschleuniger enthält. Das Polymer- bzw. Polymergemisch ist so aufgebaut, dass es mit dem Matrixharz vernetzen kann. Das heißt, es handelt sich um ein gleichartiges Polymerharz oder um ein Polymer, welches mit funktionellen Gruppen versehen ist, die eine Vernetzung mit dem Matrixharz ermöglichen. Einsetzbar sind beispielsweise Polyurethane Polyester, Polyamide, Epoxide, Phenolharze oder Melaminharze oder Mischungen aus diesen Polymeren, da solch vorgenannte Polymere ebenfalls als Matrixharz, in dem Fall zusammen mit Reaktanten und Beschleunigerkomponenten, im Harzinjektionsverfahren verwendet werden. Die Beschichtung des textilen Flächengebildes des Verarbeitungshilfsmittels wird jedoch ohne Reaktant und auch ohne Beschleuniger vorgesehen, so dass nach der Harzinjektion und Aushärtung des Harzgemisches die Beschichtung des Verarbeitungshilfsmittels im Matrixharz aufgeht, d.h. mit dem Matrixharz zu einer einheitlichen Phase vernetzt. Es entstehen keine störenden Grenzflächen durch diese beim Verarbeitungshilfsmittel vorgesehenen klebrigen Beschichtungen. Die Matrix im ausgehärteten Schichtverbundteil bildet dann eine homogene Phase.

Für das Verarbeitungshilfsmittel sind textile Substrate wie Gewebe, Gewirke, Vliesstoffe, Gelege oder Multiaxialgelege als textile Flächengebilde einsetzbar. Diese Flächengebilde können aus gleichen oder unterschiedlichen Fasern bestehen, nämlich anorganischen Fasern oder organischen Polymerfasern, wie beispielsweise aromatische Polyamidfasern (Aramidfasern). Werden als Fasern anorganische Fasern, wie beispielsweise Kohlenstofffasern, Siliciumcarbidfasern oder Glasfasern eingesetzt, so besitzt ein solches Verarbeitungshilfsmittel eine hohe Steifigkeit und eine hohe Zugfestigkeit. Ein solches Verarbeitungshilfsmittel kann zusätzlich als Armierung für den durch das RTM-Verfahren zu bildenden Schichtstoff dienen.

Zur Fixierung der Lagen, die den späteren Schichtstoff bilden sollen, werden die Verarbeitungshilfsmittel wie oben beschrieben als Zwischenlage zwischen einzelnen unbeschichteten Faserstofflagen in der Form der Harzinjektionsvorrichtung angeordnet. Die Verarbeitungshilfsmittel werden dabei zwischen einzelne oder zwischen alle Lagen gelegt, vorzugsweise zwischen alle Lagen. Das Verarbeitungshilfsmittel kann also wahlweise vollflächig oder teilflächig die unbeschichteten Faserstofflagen abdecken. Bei teilflächiger Abdeckung sind Verarbeitungshilfsmittel in verschiedenen Ausführungen einsetzbar, beispielsweise als Streifen. Wird das Verarbeitungshilfsmittel teilflächig zwischen den einzelnen Lagen in der Harzinjektionsvorrichtung vorgesehen, ist es von Vorteil, wenn das Verarbeitungshilfsmittel bereits als Band hergestellt wird, so dass einzelne Bandstücke als Zwischenlage lokal an gewünschte Stellen zwischen gleichen oder unterschiedlichen Lagen zur Fixierung einsetzbar sind.

Nach einem weiteren Ausführungsbeispiel wird das textile Flächengebilde des Verarbeitungshilfsmittels als dünne Schicht hergestellt, so dass beim Harzinjektionsverfahren das Verarbeitungshilfsmittels vollflächig zwischen den gleichen oder unterschiedlichen unbeschichteten Faserstofflagen eingelegt werden kann. Die Herstellung des Schichtverbundstoffs wird nicht beeinträchtigt, da in diesem Fall die Oberfläche des textilen Flächengebildes des Verarbeitungshilfsmittels nur eine partiell aufgebrachte Beschichtung besitzt, die einen ungehinderten Matrixharzfluss zur Herstellung des Schichtstoffes erlaubt.

Die klebrige Beschichtung auf der Oberfläche des textilen Flächengebildes des Verarbeitungshilfsmittels kann vollflächig oder teilflächig vorgesehen sein, wobei die Beschichtungsdicke örtlich unterschiedlich ausgebildet sein kann. Wird eine teilflächige Beschichtung vorgesehen, so kann diese in Form von Streifen oder Mustern, beispielsweise rautenförmig oder punktförmig auf der Oberfläche des textilen Flächengebildes aufgebracht sein. Die Art und Weise wie diese Beschichtung auf der Oberfläche des Verarbeitungshilfsmittels ausgebildet ist, hat Einfluss auf den Durchfluss des Harzgemisches bei dem Harzinjektionsverfahren. Wird die klebrige Beschichtung beispielsweise in isolierten Streifen auf das textile Flächengebilde aufgebracht und das so hergestellte Verarbeitungshilfsmittel zwischen den Lagen in der Form der Harzinjektionsvorrichtung angeordnet, wobei die Streifen in Richtung des Durchflusses des Harzgemisches ausgerichtet sind, so wird das Verarbeitungshilfsmittel den Durchfluss des Harzgemisches nicht beeinträchtigen. In gleicher Weise ist dies bei punktförmig verteilten Beschichtungen zu erwarten. Vollflächig beschichtete Verarbeitungsmittel würden den Durchfluss des Harzgemisches stark beeinträchtigen. Solche Verarbeitungshilfsmittel können gegebenenfalls nur lokal als kleine Flächenstücke auf eine Lage aufgeklebt werden.

Wird ein Verarbeitungshilfsmittel beispielsweise als Band gefertigt und nur lokal zwischen den Faserstofflagen positioniert, so kann mit Blick auf einen guten Durchfluss des Matrixharzes in der RTM-Form die Beschichtung nur teilflächig, etwa linienförmig, erfolgen.

Eine teilflächige Beschichtung kann auch den Vorteil haben, dass Bereiche des Verarbeitungshilfsmittels, die keinen Eingang in das Produkt finden, beispielsweise Randbereiche, aufgrund dessen, dass sie nicht mit einer Beschichtung imprägniert sind, einen verwertbaren Abfall darstellen und einem Recycling-Verfahren unterworfen werden können.

Wie oben beschrieben ist es möglich, das Verarbeitungshilfsmittel großflächig herzustellen und kleinere Flächen davon zur Fixierung der Lagen beim Harzinjektionsverfahren zu verwenden. Textile Flächengebilde lassen sich in der Regel schlecht stanzen, wenn sie mit einer klebrigen Beschichtung versehen sind. Aus diesem Grund kann benachbart zur klebrigen Beschichtung eine zweite Beschichtung vorgesehen werden, beispielsweise ein hartes, nichtklebriges Harz, das eine Stanzung ermöglicht.
Die Beschichtung für das Flächengebilde des Verarbeitungshilfsmittels kann bedarfsweise auch funktionelle Zusätze enthalten, die gewünschte Eigenschaften (Elastizität, Schlagzähigkeit) des Schichtstoffes beeinflussen.

### Ausführungsbeispiel:

In einer RTM-Spritzgießform sind mehrere Lagen eines Faserstoffes drapiert. Zwischen diesen Lagen sind Bänder eines erfindungsgemäßen Verarbeitungshilfsmittels gelegt. Diese Bänder bestehen aus Glasfasern, die in Streifen mit einem Epoxidharzgemisch beschichtet sind. Dieses Epoxidharzgemisch besteht zu 60 Gew% aus kristallinem, hochmolekularem Epoxid und zu 40 Gew% aus flüssigen, niedermolekularem Epoxid. Das Epoxidharzgemisch wird durch einfaches Verrühren erhalten. Dieses Epoxidharzgemisch ist streifenförmig in parallelen Linien auf das Band aufgetragen und die Bänder sind so in die RTM-Form eingelegt und zwischen den Lagen angeordnet worden, dass beim nachfolgenden Injizieren des flüssigen Matrixharzes der Durchfluss des Matrixharzes ungestört erfolgen kann. Das Matrixharzgemisch besteht aus einem Epoxidharz, einem Reaktanten und einem Beschleuniger. Dieses Matrixharzgemisch wird in dünnflüssigem Zustand in die RTM-Spritzgießform eingespritzt. Unter Anwendung von Druck und Temperatur erfolgt in der Form eine Vernetzung des Epoxidharzes. Während der Einwirkung von Wärme und der Vernetzung geht das Harz aus dem flüssigen Zustand in den erstarrten und schließlich in den festen Zustand über. Das entstandene Faserschichtverbundteil zeigt, dass die Faserstofflagen bestimmungsgemäß positioniert verblieben sind und dass die klebrige Beschichtung des Verarbeitungshilfsmittels mit der Epoxidharzmatrix vernetzt ist. Es haben sich keine Grenzflächen ausgebildet und es liegt demzufolge keine Störung der Matrix vor.

## Patentansprüche

1. Verfahren zur Herstellung von Schichtstoffen umfassend die folgenden Schritte:
- Einlegen einer ersten unbeschichteten Faserstofflage in die Form einer Harzinjektionsvorrichtung,
- Auflegen einer aus einem textilen Flächengebilde bestehenden Zwischenlage als Verarbeitungshilfsmittel auf die erste Faserstofflage, wobei diese Zwischenlage mit einer klebrigen Beschichtung versehen ist, die aus mit dem Matrixharz vernetzbaren Polymer bzw. Polymergemisch ohne Reaktant aufgebaut ist und wobei die Zwischenlage in ihrer Gesamtfläche geringer dimensioniert ist als die unbeschichtete Faserstofflage,
- Einlegen weiterer unbeschichteter Faserstofflagen sowie Auflegen weiterer beschichteter Zwischenlagen auf die Faserstofflagen,
- Schließen der Form,
- Evakuieren der geschlossenen Form und Injektion des Harzgemisches, das aufgebaut ist aus einem vernetzbaren Matrixharz, Reaktant und gegebenenfalls Beschleuniger, bis zur vollständigen Imprägnierung aller Faserstofflagen,
- Vernetzung des injizierten Matrixharzes, einschließlich der klebrigen Beschichtung, durch Wärmeanwendung,
- Herausnahme des Schichtstoffes aus der Form nach Abkühlung.

2. Verfahren nach Anspruch 1, **dadurch gekennzeichnet, dass** die beschichteten Zwischenlagen zwischen allen unbeschichteten Faserstofflagen vorgesehen werden.

3. Verfahren nach Anspruch 2, **dadurch gekennzeichnet, dass** die Zwischenlagen an ihrer Oberfläche eine vollflächige oder partielle Beschichtung besitzen.

4. Verfahren nach Anspruch 3, **dadurch gekennzeichnet, dass** die Zwischenlage so zwischen den gleichen oder unterschiedlichen Faserstofflagen eingelegt wird, dass die teilflächige Beschichtung in Richtung des Durchflusses des Harzgemisches gerichtet ist.

5. Verfahren nach einem der Ansprüche 1 bis 4, **dadurch gekennzeichnet, dass** das textile Flächengebilde der Zwischenlage ein Multiaxialgelege ist, wobei die Zwischenlage derart in die Form eingelegt wird, dass die meisten Fasern des Multiaxialgeleges so positioniert sind, dass sie beim fertigen Schichtstoff in Kraftaufnahmerichtung liegen.

6. Verfahren nach einem der Ansprüche 1 bis 5, **dadurch gekennzeichnet, dass** gleiche oder unterschiedliche unbeschichtete Faserstofflagen in die Form eingelegt werden.

7. Verfahren nach Anspruch 6, **dadurch gekennzeichnet, dass** die Zwischenlage so zwischen den gleichen oder unterschiedlichen Faserstofflagen eingelegt wird, dass das Verarbeitungshilfsmittel anorganische Fasern, wie Kohlenstofffasern, Siliciumcarbidfasern oder Glasfasern beinhaltet, die eine zusätzliche Armierung im fertigen Schichtstoff bildet.

8. Verfahren nach einem der Ansprüche 1 bis 7, **dadurch gekennzeichnet, dass** die Zwischenlage als dünnes Substrat hergestellt wird, so dass die Zwischenlage eine wesentlich geringere Dicke als die unbeschichteten Faserstofflagen besitzt.

9. Verarbeitungshilfsmittel für das Harzinjektionsverfahren, das als Zwischenlage zur besseren Fixierung von gleichen oder unterschiedlichen unbeschichteten Faserstofflagen in einer Form einer Harzinjektionsvorrichtung bei der Herstellung von Schichtstoffen einsetzbar ist,
wobei das Verarbeitungshilfsmittel den Durchfluss des Harzgemisches, das aufgebaut ist aus einem vernetzbaren Matrixharz mit Reaktant und gegebenenfalls Beschleuniger, ermöglicht und
wobei das Verarbeitungshilfsmittel aus einem textilen Flächengebilde aufgebaut ist, welches ein- oder beidseitig mit einer klebrigen Beschichtung versehen ist, wobei die vorgesehene klebrige Beschichtung teilflächig vorgesehen wird
**dadurch gekennzeichnet, dass**
die Beschichtung aus mit dem Matrixharz vernetzbaren Polymer bzw. Polymergemisch ohne Reaktant aufgebaut ist.

10. Verarbeitungshilfsmittel nach Anspruch 9, **dadurch gekennzeichnet, dass** die teilflächige Beschichtung des textilen Flächengebildes in Form von Streifen, Rauten oder punktförmig verteilt auf die Oberfläche des textilen Flächengebildes aufgebracht ist.

11. Verarbeitungshilfsmittel nach Anspruch 9 oder 10, **dadurch gekennzeichnet, dass** die Beschichtung örtlich in einer unterschiedlichen Dicke auf der Oberfläche des textilen Flächengebildes vorgesehen ist.

12. Verarbeitungshilfsmittel nach einem der Ansprüche 9 bis 11, **dadurch gekennzeichnet, dass** das Verarbeitungshilfsmittel als Band hergestellt wird.

13. Verarbeitungshilfsmittel nach einem der Ansprüche 9 bis 12, **dadurch gekennzeichnet, dass** als Flächengebilde für das Verarbeitungshilfsmittel ein aus Fasern bestehendes Substrat wie ein Gewebe oder ein Gewirke oder ein Vliesstoff oder ein Gelege oder ein Multiaxialgelege vorgesehen ist.

14. Verarbeitungshilfsmittel nach Anspruch 13, **dadurch gekennzeichnet, dass** das Flächengebilde aus gleichen oder verschiedenen anorganischen Fasern, beispielsweise Kohlenstofffasern, Siliciumcarbid-Fasern oder Glasfasern, aufgebaut ist.

15. Verarbeitungshilfsmittel nach Anspruch 13, **dadurch gekennzeichnet, dass** das Flächengebilde aus gleichen oder unterschiedlichen organischen PolymerFasern, beispielsweise aromatischen Polyamidfasern (Aramidfasern), aufgebaut ist.

16. Verarbeitungshilfsmittel nach einem der Ansprüche 9 bis 15, **dadurch gekennzeichnet, dass** als klebrige Beschichtung für das Flächengebilde des Verarbeitungshilfsmittels Polyurethane oder Polyester oder Polyamide oder Epoxide oder Phenolharze oder Melaminharze oder Mischungen aus diesen Kunststoffen eingesetzt werden.

17. Verarbeitungshilfsmittel nach Anspruch 16, **dadurch gekennzeichnet, dass** als Beschichtung für das Flächengebilde des Verarbeitungshilfsmittels eine Epoxidmischung aus 40-60 Gew% eines kristallinen, hochmolekularen Epoxids und 60-40 Gew% eines flüssigen, niedrigmolekularen Epoxids eingesetzt wird.

18. Verarbeitungshilfsmittel nach Anspruch 16, **dadurch gekennzeichnet, dass** auf dem Flächengebilde des Verarbeitungshilfsmittels zwei verschiedene Beschichtungen in unterschiedlichen Oberflächenbereichen vorgesehen werden, nämlich die klebrige Beschichtung und zusätzlich eine nichtklebrige Beschichtung, wobei die Oberflächenbereiche mit klebriger Beschichtung von Oberflächenbereichen mit nichtklebriger Beschichtung umgeben sind.

19. Verarbeitungshilfsmittel nach Anspruch 18, **dadurch gekennzeichnet, dass** die Oberflächenbereiche mit klebriger Beschichtung von Oberflächenbereichen mit nichtklebriger, vorzugsweise harter, Beschichtung vollständig umrandet sind, so dass eine Abtrennung der klebrig beschichteten Bereiche möglich ist.

20. Verarbeitungshilfsmittel nach einem der Ansprüche 9 bis 19, **dadurch gekennzeichnet, dass** die Beschichtung für das Flächengebilde des Verarbeitungshilfsmittels zusätzlich funktionelle Zusätze enthält.

## Claims

1. Procedure for manufacturing laminates comprising of the following steps:
- Inserting an initial uncoated layer of fibrous material in the mould of a resin injection fixture,
- Applying one of the existing intermediate layers from a planar textile structure to the first layer of fibrous material as a processing aid, whereby, an adhesive coating, based on a matrix resin of curable polymer or polymer composite without reactant, is applied to this intermediate layer and, whereby, the intermediate layer is of a smaller dimension than the uncoated layer of fibrous material,
- Inserting further uncoated layers of fibrous material, as well as placing further uncoated intermediate layers of the fibrous material,
- Closing the mould,
- Evacuating the closed mould and injecting the resin mixture, based on a curable matrix resin, reactant and, as necessary, accelerator, to complete impregnation of all layers of the fibrous material,
- Curing the resin injected, including the adhesive coating, by the application of heat,
- Removal of the laminate from the mould after cooling.

2. Procedure according to claim 1, **characterized in that** the coated intermediate layers are provided between all uncoated intermediate layers of the fibrous material.

3. Procedure according to claim 2, **characterized in that** the surface of the intermediate layers has a complete or partial coating.

4. Procedure according to claim 3, **characterized in that** the intermediate layer is inserted between the same or different layers of fibrous material so that the partial surface coating is aligned towards the flow of the resin mixture.

5. Procedure according to one of the claims 1 to 4, **characterized in that** the planar textile structure of the intermediate layer is a multiaxial laid scrim, whereby, the intermediate layer is inserted into the mould so that the majority of the fibres of the multiaxial laid scrim are positioned so that when the laminate is complete, they lay in the direction of force application.

6. Procedure according to one of the claims 1 to 5, **characterized in that** the same or different layers of fibrous material are inserted into the mould.

7. Procedure according to claim 6, **characterized in that** the intermediate layer is inserted between the same or different layers of fibrous material so that the inorganic fibres as an a processing aid contain, for example carbon fibres, silicon carbide fibres or glass fibre that forms additional reinforcement in the completed laminate.

8. Procedure according to one of the claims 1 to 7, **characterized in that** the intermediate layer is manufactured as a thin substrate, so that the intermediate layer is of a significantly less thickness than the uncoated layers of fibrous material.

9. Processing aid for the resin injection procedure used as an intermediate layer for better fixing of the same or different uncoated layers of fibre material in a mould of a resin injection device for the manufacture of laminates,
whereby, the processing aid enables the flow of the resin mixture that is based on a curable matrix resin with reactant and, as necessary, accelerator and
whereby, the processing aid is based on a planar textile structure that is provided with an adhesive coating on one or both sides,
whereby, the adhesive coating provided is provided on a partial surface
**characterized in that**, the coating is based on the matrix resin of curable polymer or polymer composite without reactant.

10. Processing aid according to claim 9, **characterized in that** the partial surface coating of the planar textile structure is applied distributed on the surface of the planar textile structure in the form of stripes, swirls or points.

11. Processing aid according to claim 9 or 10, **characterized in that** the coating is provided locally on the surface at different thickness of the planar textile structure.

12. Processing aid according to one of the claims 9 to 11, **characterized in that** the processing aid is manufactured as a strip.

13. Processing aid according to one of the claims 9 to 12, **characterized in that** a substrate made from fibers, such as a fabric or knitted fabric or a fleece fabric or a scrim or a multiaxial laid scrim, is provided as planar textile structure for the processing aid.

14. Processing aid according to claim 13, **characterized in that** the planar textile structure is based on the same or different inorganic fibres, for example, carbon fibres, silicon carbide fibres or glass fibres.

15. Processing aid according to claim 13, **characterized in that** the planar textile structure is based on the same or different inorganic polymer fibres, for example, aromatic polyamide fibres (aramid fibres).

16. Processing aid according to one of the claims 9 to 15, **characterized in that** the adhesive coating used for the planar textile structure of the processing aid is made from polyurethane or polyester or polyamide or epoxy or phenol resin or mixtures of these plastics.

17. Processing aid according to claim 16, **characterized in that** the coating used for the planar textile structure of the processing aid is an epoxy mixture made from 40-60% by weight of a crystalline, high-molecular epoxy and 60-40% by weight of a liquid, low-molecular epoxy.

18. Processing aid according to claim 16, **characterized in that** the two different coatings are provided on the planar textile structure of the processing aid in different areas of the surface, namely, the adhesive coating and an additional non-adhesive coating, whereby, the surface areas with adhesive coating are surrounded by surface areas with non-adhesive coating.

19. Processing aid according to claim 18, **characterized in that** the surface areas with adhesive coating are completely surrounded by non-adhesive, preferably hard, coating so that it is possible to separate the areas coated with adhesive.

20. Processing aid according to one of the claims 9 to 19, **characterized in that** the coating for the planar textile structure of the processing aid includes additional functional admixtures.

## Revendications

1. Procédé pour produire des stratifiés, comprenant les étapes suivantes :
- Mise en place d'une première couche de matériau fibreux non revêtue dans le moule d'un dispositif à injection de résine,
- Pose, sur la première couche de matériau fibreux, d'une couche intermédiaire composée d'une structure textile plane et officiant de moyen auxiliaire de traitement, sachant que cette couche intermédiaire est dotée d'un revêtement collant basé sur un polymère ou mélange polymère sans réactif, réticulable avec la résine matricielle, et sachant que la surface totale de la couche intermédiaire présente une dimension plus petite que la couche de matériau fibreux non revêtue,
- Mise en place d'autres couches de matériau fibreux non revêtues et pose d'autres couches intermédiaires revêtues sur les couches de matériau fibreux,
- Fermeture du moule,
- Mise sous vide du moule fermé et injection du mélange résineux composé d'une résine matricielle réticulable, d'un réactif et le cas échéant d'un accélérateur, jusqu'à imprégnation de toutes les couches de matériau fibreux,
- Réticulation de la résine matricielle injectée, y compris du revêtement collant, par application de chaleur,
- Extraction du stratifié du moule après refroidissement.

2. Procédé selon la revendication 1, **caractérisé en ce que** les couches intermédiaires revêtues sont prévues entre toutes les couches de matériau fibreux non revêtues.

3. Procédé selon la revendication 2, **caractérisé en ce que** les couches intermédiaires présentent sur leur surface un revêtement couvrant entièrement ou partiellement la surface.

4. Procédé selon la revendication 3, **caractérisé en ce que** la couche intermédiaire est intercalée entre les couches de matériau fibreux identiques ou différentes de manière que le revêtement couvrant partiellement la surface soit orienté en direction de l'écoulement du mélange résineux.

5. Procédé selon les revendications 1 à 4, **caractérisé en ce que** la structure plane textile de la couche intermédiaire est une nappe multiaxiale, sachant que la couche intermédiaire est introduite dans le moule de manière à positionner la plupart des fibres du matériau couché multiaxial de sorte qu'elles reposent, dans le stratifié fini, dans le sens d'absorption de la force.

6. Procédé selon l'une des revendications 1 à 5, **caractérisé en ce que** des couches de matériau fibreux identiques ou différentes sont déposées dans le moule.

7. Procédé selon la revendication 6, **caractérisé en ce que** la couche intermédiaire est introduite entre des couches de matériau fibreux identiques ou différentes de sorte que le moyen auxiliaire de traitement contienne des fibres inorganiques telles que des fibres de carbone, fibres de carbure de silicium ou fibres de verre formant une armature supplémentaire dans le stratifié fini.

8. Procédé selon l'une des revendications 1 à 7, **caractérisé en ce que** la couche intermédiaire est fabriquée sous forme de substrat mince, de sorte que la couche intermédiaire présente une épaisseur essentiellement inférieure à celle des couches de matériau fibreux non stratifiées.

9. Moyen auxiliaire de traitement pour le procédé d'injection de résine, utilisable comme couche intermédiaire servant à mieux immobiliser des couches de matériaux fibreux
non revêtues identiques ou différentes dans le moule d'un dispositif à injection de résine lors de la fabrication de stratifiés,
sachant que le moyen auxiliaire de traitement permet l'écoulement du mélange résineux basé sur une résine matricielle réticulable avec réactif et le cas échéant un accélérateur, et
sachant que moyen auxiliaire de traitement se compose d'une structure textile plane dotée d'un revêtement collant sur un côté ou les deux,
sachant que le revêtement collant prévu est prévu sur une partie de la surface,
**caractérisé en ce que**
le revêtement composé de polymère ou mélange polymère réticulable avec la résine matricielle ne contient pas de réactif.

10. Moyen auxiliaire de traitement selon la revendication 9, **caractérisé en ce que** le revêtement partiel de la structure textile plane y est posé sous forme de bandes, losanges ou de points répartis sur la surface de la structure textile plane.

11. Moyen auxiliaire de traitement selon la revendication 9 ou 10, **caractérisé en ce que** le revêtement prévu présente des épaisseurs différentes localement sur la surface de la structure textile plane.

12. Moyen auxiliaire de traitement selon l'une des revendications 9 à 11, **caractérisé en ce que** ledit moyen auxiliaire de traitement est fabriqué sous forme de bande.

13. Moyen auxiliaire de traitement selon l'une des revendications 9 à 12, **caractérisé en ce qu'**est prévue, comme structure plane pour le moyen de traitement, une surface support composée de fibres telles qu'un textile ou un tissu à mailles ou un non-tissé ou une nappe ou une nappe multiaxiale.

14. Moyen auxiliaire de traitement selon la revendication 13, **caractérisé en ce que** la structure plane se compose de fibres inorganiques identiques ou différentes, par exemple de fibres de carbone, fibres au carbure de silicium ou fibres de verre.

15. Moyen auxiliaire de traitement selon la revendication 13, **caractérisé en ce que** la structure plane se compose de fibres polymères organiques identiques ou différentes, par exemple de fibres polyamides aromatiques (fibres aramides).

16. Moyen auxiliaire de traitement selon l'une des revendications 9 à 15, **caractérisé en ce que** comme revêtement collant pour la structure plane du moyen auxiliaire de traitement sont mis en oeuvre des polyuréthanes ou polyesters ou polyamides ou résines époxy ou résines phénolées ou résines mélamines ou mélanges de ces matières plastiques

17. Moyen auxiliaire de traitement selon la revendication 16, **caractérisé en ce que** comme revêtement pour la structure plane du moyen auxiliaire de traitement est mis en oeuvre un mélange de résines époxy composé à 40-60 % pondéraux de résine époxy cristalline à haut poids moléculaire et à 60-40 % pondéraux d'une résine époxy liquide d'un faible poids moléculaire.

18. Moyen auxiliaire de traitement selon la revendication 16, **caractérisé en ce que** sur la structure plane du moyen auxiliaire de traitement sont prévus deux revêtements différents dans des zones superficielles différentes, à savoir le revêtement collant et en plus un revêtement non collant, sachant que les zones superficielles présentant le revêtement collant sont entourées de zones superficielles présentant le revêtement non collant.

19. Moyen auxiliaire de traitement selon la revendication 18, **caractérisé en ce que** les zones superficielles à revêtement collant sont périmétriquement entourées de zones superficielles à revêtement non collant de préférence dur, de sorte qu'il soit possible de détacher les zones à revêtement collant.

20. Moyen auxiliaire de traitement selon l'une des revendications 9 à 19, **caractérisé en ce que** le revêtement de la structure plane du moyen auxiliaire de traitement présente des additifs fonctionnels supplémentaires.
